# EUROPÄISCHE PATENTSCHRIFT

(11) **EP 3 927 575 B1**
(45) Veröffentlichungstag und Bekanntmachung des Hinweises auf die Patenterteilung: **08.05.2024**
(21) Anmeldenummer: 20705016.2
(22) Anmeldetag: 07.02.2020
(51) Int. Cl.: B60L 53/51, B60L 53/52, B60L 53/64, B60L 53/66, B60L 53/30

(54) **LADEEINRICHTUNG ZUM LADEN EINES ELEKTRISCHEN ENERGIESPEICHERS EINES KRAFTFAHRZEUGS, SYSTEM UND VERFAHREN ZUM STEUERN EINER LADEEINRICHTUNG**
CHARGING DEVICE FOR CHARGING AN ELECTRICAL ENERGY STORE OF A MOTOR VEHICLE, SYSTEM AND METHOD FOR CONTROLLING A CHARGING DEVICE
DISPOSITIF DE CHARGE POUR LA CHARGE D'UN ACCUMULATEUR D'ÉNERGIE ÉLECTRIQUE D'UN VÉHICULE À MOTEUR, SYSTÈME ET PROCÉDÉ POUR FAIRE FONCTIONNER UN DISPOSITIF DE CHARGE

(30) Priorität: 22.02.2019 DE 102019202448
(43) Veröffentlichungstag der Anmeldung: 29.12.2021
(73) Patentinhaber: Audi AG, 85045 Ingolstadt (DE)
(72) Erfinder: WOLF, Jens, 82223 Eichenau (DE)
(86) Internationale Anmeldenummer: PCT/EP2020/053082
(87) Internationale Veröffentlichungsnummer: WO 2020/169360

(56) Entgegenhaltungen:
- EP-A2- 2 756 982
- DE-A1-102010 036 087
- DE-U1-202015 101 557
- US-A1- 2011 204 720
- US-A1- 2014 049 217

## Beschreibung

Die Erfindung betrifft eine Ladeeinrichtung zum Koppeln mit einem Kraftfahrzeug zum elektrischen Laden eines Energiespeichers des Kraftfahrzeugs, wobei die Ladeeinrichtung einen Energiebezugs-Anschluss zum Koppeln mit einer Energiequelle aufweist, die dazu ausgelegt ist, dezentral erzeugte regenerative Energie und aus einem öffentlichen Versorgungs-Stromnetz beziehbare Energie am Energiebezugs-Anschluss der Ladeeinrichtung bereitzustellen. Zur Erfindung gehören auch ein System mit einer solchen Ladeeinrichtung sowie ein Verfahren zum Steuern einer Ladeeinrichtung.

Ladeeinrichtungen, wie zum Beispiel sogenannte Wallboxen, sind aus dem Stand der Technik bekannt. Herkömmliche Ladeeinrichtungen bieten üblicherweise ausschließlich den im Haus verfügbaren Strom, der normalerweise aus einem öffentlichen Versorgungsstromnetz bezogen wird, an. Es gibt aber auch intelligentere Ladeeinrichtungen, die die Ladeleistung bereits so regeln können, dass ausschließlich Strom aus regenerativen Quellen, wie zum Beispiel Solarstrom, zur Ladung verwendet wird, damit kein Haushaltsstrom mehr zugekauft werden muss, zumindest falls ein Haus über eine Photovoltaikanlage verfügt.

Ein Beispiel hierfür ist in der DE 20 2014 001 367 U1 beschrieben, die eine automatische Leistungsregelung einer Ladeeinrichtung für Elektrofahrzeuge beschreibt, die in Abhängigkeit von der Leistung einer Energieerzeugeranlage erfolgt. Ein intelligenter Ladecontroller übernimmt dabei die Aufgabe der zentralen Ladungssteuerung des Fahrzeugs in Abhängigkeit des aktuell eigenerzeugten Stroms, dem allgemeinen Verbrauch im Haus und spezifischen Einstellungen des Benutzers. Die Steuerung soll dabei die Ladung so optimieren, dass am Haus-Übergabepunkt eine Null-Summe entsteht. Die Ladeleistung wird dabei so gesteuert, dass das Fahrzeug nur so viel Energie beziehen darf, wie sonst ins öffentliche Netz fließen würde. Erhöht sich die Eigenerzeugerleistung, zum Beispiel bei Sonnenstandsänderung, im Haus, wird die Ladeleistung des Fahrzeugs verstärkt, bis es wieder zu einem Null-Bezug am Hausübergabepunkt kommt.

Diese Ladestrategie ist zwar sehr energieeffizient, allerdings müssen hierbei mitunter sehr lange Ladezeiten in Kauf genommen werden, und zum Teil kann auch überhaupt kein Ladevorgang des Fahrzeugs stattfinden, beispielsweise wenn aktuell kein Überschuss an regenerativer Energie vorhanden ist, was im Falle einer Solaranlage beispielsweise nachts der Fall ist. Dies schränkt die Flexibilität hinsichtlich der Lademöglichkeiten enorm ein.

Weiterhin beschreibt die DE 10 2010 049 021 A1 ein dezentrales System mit Energiequellen, wie zum Beispiel einem öffentlichen Netz sowie optional weiterer Energiequellen, wie ein Windkraftwerk, eine Photovoltaikanlage und/oder ein dezentrales Heizkraftwerk. Weiterhin weist das dezentrale System einen stationäre Energiespeicher auf, der aus den Energiequellen mit Energie geladen werden soll, wobei dann ein mobiler Energiespeicher, wie der eines Elektrofahrzeugs, aus diesem stationäre Energiespeicher geladen werden kann. Der stationäre Energiespeicher soll dabei mit einem geringeren Energiestrom über eine längere Zeit aufgeladen werden, wobei dann nachfolgend in einem kürzeren Zeitraum der mobile Energiespeicher schnell aufgeladen werden kann, insbesondere mit einem sehr hohen Energiestrom. Damit müssen im öffentlichen Netz nur geringe Leistungsquerschnitte berücksichtigt werden und kostspielige Leistungsquerschnitte sind nur für die geringen Distanzen im System zwischen dem stationären und dem mobilen Energiespeicher notwendig.

Auch stationäre Energiespeicher sind zur Zeit noch sehr kostspielig. Ein Hausbesitzer, welcher beispielsweise eine Photovoltaikanlage betreibt, würde einen solchen zusätzlichen stationären Energiespeicher nur zum Zwischenspeichern der durch die Photovoltaikanlage erzeugten Energie verwenden, nicht jedoch, um aus einem Stromnetz Energie zu beziehen und diesen in dem besagten Zwischenspeicher zwischenzuspeichern, da dies Speicherplatz für die regenerative Energie wegnimmt, die aus Sicht des Benutzers jedoch deutlich kostengünstiger ist als Strom aus dem öffentlichen Netz zu beziehen. Zwar kann somit eine schnellere Möglichkeit zum Laden des Kraftfahrzeugs bereitgestellt werden, welche jedoch für einen Benutzer Mehrkosten verursacht.

Weiterhin beschreibt die DE 10 2013 212 219 A1 ein Ladekabel zum Laden eines elektrischen Energiespeichers, welches ein intelligentes elektrisches Laden ohne Verwendung einer Wallbox ermöglicht. Die üblicherweise von einer Wallbox übernommenen Funktionen werden vorliegend von diesem Ladekabel übernommen. Weiterhin kann je nach Ladestrategie der Ladestrom für das Elektrofahrzeug von einer Kraft-Wärme-Kopplungs-Anlage, von einer Speicherbatterie oder einem öffentlichen Netz bereitgestellt werden. In der Speicherbatterie kann dabei die Energie einer Solaranlage elektrochemisch gespeichert werden.

Hier besteht zumindest die Wahlmöglichkeit, Energie für das Kraftfahrzeug aus einer regenerativen Energiequelle oder einem öffentlichen Netz zu beziehen. Will man jedoch Strom von der Photovoltaikanlage beziehungsweise Solaranlage beziehen, so müssen mitunter Nachteile in Bezug auf die Stromversorgung anderer Haushaltskomponenten und Verbraucher in Kauf genommen werden, zumindest wenn die Solaranlage nicht für alle Komponenten hinreichend Strom bereitstellen kann. Dies führt letztendlich wieder dazu, dass zum Beispiel zwar das Kraftfahrzeug über Solarstrom geladen werden kann, für die übrigen Hausverbraucher jedoch der Strom nicht mehr ausreicht und dieser aus dem öffentlichen Netz bezogen werden muss, was ebenfalls keinen Mehrgewinn bietet. Andernfalls muss der Benutzer selbst dafür Sorge tragen, sein Kraftfahrzeug nur zu solchen Zeitpunkten zu laden, zum Beispiel durch Einstecken und wieder Herausziehen des Ladekabels, sodass in Abhängigkeit des Sonnenstandes und mit Blick auf den Stromzähler immer ausreichend Strom zum Laden des Kraftfahrzeugs sowie auch der Versorgung übriger Haushaltsverbraucher vorhanden ist. Auch dies ist nicht sonderlich praktikabel für einen Benutzer.

Die US 2014/0049217 A1 beschreibt einen elektrischen Speicher eines Kraftfahrzeugs, der mit einer benötigten Energiemenge geladen wird, die zu einem Energiemengenverbrauch bei der nächsten Fahrt korrespondiert, so dass ein Mangel an erneuerbarer Energie an einer Ladestation durch Systemenergie kompensiert wird.

Die EP 2 756 982 A2 beschreibt ein Verfahren zum Austauschen von Ladeinformation zwischen einer Ladestation und einem Kassensystem.

Aufgabe der vorliegenden Erfindung ist es daher, eine Ladeeinrichtung, ein System und ein Verfahren zum Steuern einer Ladeeinrichtung bereitzustellen, die es ermöglichen, ein Kraftfahrzeug unter Verwendung regenerativer Energie einerseits möglichst effizient zu laden und andererseits aus Sicht des Ladenden einen möglichst hohen Nutzungs- bzw. Bedienkomfort bereitzustellen.

Diese Aufgabe wird gelöst durch eine Ladeeinrichtung, durch ein System und ein Verfahren zum Steuern einer Ladeeinrichtung mit den Merkmalen gemäß den jeweiligen unabhängigen Patentansprüchen. Vorteilhafte Ausgestaltungen der Erfindung sind Gegenstand der abhängigen Patentansprüche, der Beschreibung sowie der Figuren.

Eine erfindungsgemäße Ladeeinrichtung ist zum Koppeln mit einem Kraftfahrzeug zum elektrischen Laden eines Energiespeichers des Kraftfahrzeugs ausgelegt, wobei die Ladeeinrichtung weiterhin einen Energiebezugs-Anschluss zum Koppeln mit einer Energiequelle aufweist, die dazu ausgelegt ist, erzeugte regenerative Energie und aus einem öffentlichen Versorgungs-Stromnetz beziehbare Energie am Energiebezugs-Anschluss der Ladeeinrichtung bereitzustellen, wobei die Energiequelle eine Energieerzeugungseinrichtung zur Erzeugung der regenerativen Energie aufweist, und eine Anschlusseinrichtung zum Koppeln mit dem öffentlichen Versorgungs-Stromnetz aufweist. Weiterhin weist die Ladeeinrichtung einen ersten Lademodus auf und ist in dem ersten Lademodus und in einem mit der Energiequelle und dem Kraftfahrzeug gekoppelten Zustand dazu ausgelegt, eine vorgebbare konstante Ladeleistung zum Laden des Energiespeichers des Kraftfahrzeugs bereitzustellen, die vorgebbare konstante Ladeleistung so weit wie möglich durch regenerative Energie zu decken und nur im Fall, dass die vorgebbare Ladeleistung nur zum Teil, aber nicht ausschließlich durch die am Energiebezugs-Anschluss bereitstellbare regenerative Energie bereitstellbar ist, einen ersten Leistungsanteil in Form von regenerativer Energie und einen zweiten Leistungsanteil in Form von aus dem Stromnetz bezogener Energie gleichzeitig zum Laden des Energiespeichers bereitzustellen. Dabei ist der erste Leistungsanteil in Form eines am Energiebezugs-Anschluss durch die Energiequelle maximal bereitstellbaren Anteils der regenerativen Energie zum Laden des Energiespeichers bereitstellbar, und die Ladeeinrichtung weist eine Kommunikationseinheit auf, die dazu ausgelegt ist, mit einer der Energiequelle zugeordneten Kommunikationseinheit zu kommunizieren und im ersten Lademodus die vorgebbare Ladeleistung in Form des am Energiebezugs-Anschluss durch die Energiequelle maximal bereitstellbaren Anteils der regenerativen Energie und des zweiten Leistungsanteils in Form der aus dem Stromnetz zu beziehenden Energie anzufordern.

Die Erfindung ermöglicht es damit vorteilhafterweise, einerseits zum Laden des Energiespeichers des Kraftfahrzeugs immer eine konstante Ladeleistung bereitzustellen, die also nicht in Abhängigkeit von der aktuell verfügbaren regenerativen Energie geregelt werden muss, sodass vorteilhafterweise keine unvorhersehbar langen Ladezeiten in Kauf genommen werden müssen. Andererseits lässt sich durch diese Ladestrategie immer die maximal mögliche, zum Beispiel überschüssige, regenerative Energie zum Laden des Energiespeichers des Kraftfahrzeugs nutzen. Dies ist besonders effizient, und zwar sowohl aus Sicht des Ladenden als auch aus Sicht des Betreibers der Erzeugungsanlage zur Erzeugung der regenerativen Energie, sofern diese Personen nicht übereinstimmen, denn ist beispielsweise ein Zwischenspeicher zum Speichern solcher regenerativer Energie bereits voll geladen und kann überflüssige regenerative Energie auch sonst nicht anderweitig im Haushalt verbraucht werden, so kann diese zwar wieder ins Stromnetz eingespeist werden, diese Einspeisung gestaltet sich aber für den Einspeisenden zunehmend unlukrativer. Zwar gibt es hierfür aktuell noch eine geringfügige Vergütung, es ist jedoch zu erwarten, dass diese Vergütung zukünftig noch weiter sinkt und auf lange Sicht gar nicht mehr vorhanden sein wird. Durch die Ladeeinrichtung im Rahmen der vorliegenden Erfindung ist es nun vorteilhafterweise möglich, solche überschüssige regenerative Energie zum Laden des Energiespeichers des Kraftfahrzeugs zu verwenden und damit deutlich sinnvoller zu nutzen, als wieder ins Netz einzuspeisen. Auch aus Sicht des Ladenden ist dies besonders vorteilhaft, da nämlich gerade solche erzeugte regenerative Energie im Vergleich zu aus dem Stromnetz bezogener Energie deutlich günstiger ist, was ein umso kostengünstigeres Laden des Kraftfahrzeugs beziehungsweise des Energiespeichers erlaubt. Aus Sicht des Ladenden kann durch den ersten Lademodus der Ladeeinrichtung ein Laden des Energiespeichers bereitgestellt werden, welches einerseits durch die bereitgestellte immer konstante Ladeleistung so schnell wie möglich erfolgen kann, und andererseits auch gleichzeitig immer so kostengünstig wie möglich ist, da zum Laden des Energiespeichers so viel wie möglich an regenerativer Energie verwendet werden kann. Da andererseits nicht die gesamte Ladeleistung durch die regenerative Energie bereitgestellt werden muss, sondern ein Teil dieser auch durch Netzstrom bereitgestellt werden kann, kann der Anteil der fürs Laden genutzten regenerativen Energie so bemessen werden, dass bezüglich der Versorgung der übrigen elektrischen Verbraucher des Haushalts durch regenerative Energie keinerlei Nachteile entstehen, zum Beispiel indem nur der Anteil der regenerative Energie zum laden verwendet wird, der ohnehin überschüssig ist und ansonsten ins Netz eingespeist werden müsste. So lässt sich durch die Erfindung vorteilhafterweise der Nutzungs- bzw. Bedienkomfort für den Benutzer einerseits und die Effizienz des Ladens andererseits deutlich steigern.

Die Erfindung ermöglicht zudem auch die besonders effiziente Umsetzung sogenannter halböffentlicher Lademöglichkeiten, insbesondere zusätzlich zu einer privaten Lademöglichkeit. Beispielsweise kann nämlich der Besitzer des Kraftfahrzeugs, welches mittels der Ladeeinrichtung geladen werden soll, vom Besitzer der Energiequelle, die die erzeugte regenerative Energie bereitstellen kann, verschieden sein. Beispielsweise kann ein Hausbesitzer, der über eine auf dem Dach seines Hauses angebrachte Solaranlage beziehungsweise Photovoltaikanlage verfügt oder auch über eine andere Energieerzeugungseinrichtung zur Erzeugung regenerativer Energie, wie zum Beispiel auch eine Windkraftanlage oder ein Wasserkraftwerk oder ähnliches, eine solche Ladeeinrichtung mit seinem Heim-Energie-Management-System koppeln und die Ladeeinrichtung an einer Stelle positionieren, zum Beispiel an seinem Haus, seiner Garage oder seinem Gartenzaun, sodass der Ladepunkt vorzugsweise öffentlich zugänglich ist. Hierdurch ist es möglich, dass ein Hausbesitzer seinen selbst nicht nutzbaren Grünstrom, das heißt die regenerative Energie, anderen zum Laden ihrer Kraftfahrzeuge bereitstellen kann. Dieser bereitgestellte überschüssige Grünstrom kann dann vorteilhafterweise gemäß dem ersten Lademodus der Ladeeinrichtung in entsprechender Weise vom Haushaltsstrom ergänzt werden, um dem Ladenden eine konstante Ladeleistung bereitzustellen. Natürlich kann hierfür der Hausbesitzer vom Ladenden eine entsprechende Vergütung erhalten, die sich beispielsweise auch nach der Aufteilung des bezogenen Stroms in Grünstrom und Haushaltsstrom richten kann. Damit gestaltet sich eine solche durch die Ladeeinrichtung bereitgestellte Lademöglichkeit sowohl für einen Hausbesitzer als auch für den Ladenden lukrativ, kostengünstig und effizient. Auch ist dies energetisch besonders günstig, da so der besonders umweltschonende Grünstrom ohne viele Energieverluste direkt genutzt werden kann, insbesondere der überschüssige Anteil, während eine Netzeinspeisung eines solchen überschüssigen Anteils und eine Verteilung an andere Verbraucher üblicherweise aufgrund der größeren Übertragungsstrecken mit deutlich höheren Energieverlusten verbunden ist, was die Effizienz der Grünstromerzeugung in einem solchen Fall deutlich mindert.

Die Ladeeinrichtung kann dabei im Allgemeinen in stationärer oder auch in mobiler Form bereitgestellt sein. Beispielsweise kann die Ladeeinrichtung als eingangs beschriebene Wallbox ausgebildet sein oder auch als Ladesäule, oder zum Beispiel auch nur als intelligentes Ladekabel, wie dies ebenfalls eingangs erwähnt wurde. Bei der erzeugten regenerativen Energie kann es sich, wie ebenfalls bereits beschrieben, um Windenergie, Solarenergie oder Wasserenergie handeln. Unter dem öffentlichen Versorgungs-Stromnetz kann der herkömmliche Haushaltsstrom verstanden werden, beziehungsweise eine Anschlussmöglichkeit an das öffentliche Strom- bzw. Versorgungsnetz.

Die vorgebbare konstante Ladeleistung, die im ersten Lademodus durch die Ladeeinrichtung bereitgestellt werden kann, kann dabei aus verschiedenen vorgebbaren konstanten Ladeleistungen, zum Beispiel vom Ladenden, auswählbar sein. Die Ladeeinrichtung kann dabei mehrere diskrete konstante Ladeleistungen einem Benutzer beziehungsweise einem Benutzer des Kraftfahrzeugs zur Auswahl stellen, wie zum Beispiel 11 Kilowatt oder 22 Kilowatt Leistung. Weiterhin ist unter der konstanten Ladeleistung eine Ladeleistung zu verstehen, die während des gesamten Ladevorgangs im Wesentlichen konstant gehalten werden kann. Selbst wenn dabei also die Höhe des ersten Leistungsanteils in Form der regenerativen Energie über die Dauer des Ladevorgangs variiert, so kann entsprechend mehr oder weniger Energie aus dem Stromnetz bezogen werden, sodass immer die konstante Ladeleistung insgesamt, d.h. also als Summe aus dem ersten und zweiten Leistungsanteil, bereitgestellt werden kann. Die beim Laden bereitgestellte Gesamtleistung kann auch nur aus dem ersten Leistungsanteil oder auch nur aus dem zweiten Leistungsanteil bestehen. Kann zum Beispiel ausreichend regenerative Energie am Energiebezugs-Anschluss der Ladeeinrichtung bereitgestellt werden, so kann die gesamte konstante Ladeleistung auch ausschließlich in Form von regenerativer Energie, das heißt als der erste Leistungsanteil, zum Laden des Energiespeichers verwendet werden. Gibt es andererseits aktuell jedoch gar keine überschüssige regenerative Energie, die entsprechend von der oben genannten Energiequelle bereitgestellt werden könnte, so wird dennoch ein Laden des Kraftfahrzeugs ermöglicht, wobei dann die konstante Ladeleistung vollständig in Form von aus dem Stromnetz bezogener Energie bereitgestellt, das heißt in Form nur des zweiten Leistungsanteils. Durch die konstante Ladeleistung bleibt die Ladezeit an sich davon unbeeinflusst, und es wird ermöglicht, dass immer möglichst viel regenerative Energie zum Laden verwendet werden kann.

Erfindungsgemäß ist der erste Leistungsanteil in Form eines am Energiebezugs-Anschluss durch die Energiequelle maximal bereitstellbaren Anteils der regenerativen Energie zum Laden des Energiespeichers bereitstellbar. Mit anderen Worten ist der erste Leistungsanteil immer so groß wie möglich. Damit kann zum Laden immer so viel regenerative Energie wie möglich verwendet werden. Wie hoch dieser maximal bereitstellbare Anteil der regenerativen Energie ist, kann dabei durch die Energiequelle und/oder ihren Besitzer selbst festlegbar sein. Durch diesen maximal bereitstellbaren Anteil der regenerativen Energie kann beispielsweise immer genau der überschüssige regenerative Energieanteil bereitgestellt werden, wobei auch hier wiederum "überschüssig" unterschiedlich durch die Energiequelle beziehungsweise deren Besitzer definiert werden kann. Beispielsweise kann unter überschüssiger Energie diejenige regenerative Energie verstanden werden, die ansonsten ins Stromnetz eingespeist werden würde. Dies stellt die Energie dar, die nicht mehr in einem stationären Energiespeicher gespeichert werden kann, weil dieser bereits voll ist, und die auch nicht durch andere Verbraucher des Hauses bzw. Haushalts bzw. allgemein Verbraucher auf dem Grundstück des Besitzers der Energiequelle verbraucht werden kann. Als überschüssige regenerative Energie kann aber auch diejenige Energie definiert sein, die aktuell nicht von irgendwelchen Verbrauchern des Grundstücks beziehungsweise Hauses verbraucht werden kann, wobei weiterhin der Energiespeicher, das heißt der stationäre Energiespeicher, einen vorbestimmten Mindestladezustand, wie zum Beispiel 70 Prozent oder 80 Prozent, aufweist, aber nicht notwendigerweise vollgeladen sein muss. Da auch Heim-Energie-Management-Systeme im Laufe der Zeit immer intelligenter, angepasster und vorausschauender die Energieversorgung und - speicherung in einem Haushalt regeln und steuern können, so wird auch zukünftig die "überschüssige" regenerative Energie deutlich angepasster und genauer durch ein solches Heim-Energie-Management-System bestimmt werden können, und zwar nicht nur als die Energie, die aktuell nicht mehr verbrauchbar und speicherbar ist. Solche Systeme können beispielsweise überschüssige Energie in Abhängigkeit von der aktuellen oder auch prognostizierten Wetterlage unter Verwendung zusätzlicher Informationen und Verhalten ihrer Hausbewohner deutlich angepasster ermitteln. Da es bei der vorliegenden Erfindung jedoch um die Ladeeinrichtung und nicht um ein solches Heim-Energie-Management-System geht, wird hierauf nun nicht mehr weiter eingegangen. Im einfachsten Fall kann also durch ein solches Heim-Energie-Management-System und/oder durch einen PV-Wechselrichter oder einen zusätzlich installierten Messwertgeber zum Beispiel sekundengenau die erzeugte, gelieferte und verbrauchte Leistung im Haushalt erfasst werden und daraus die überschüssige Leistung errechnet werden, die im einfachsten Fall als die nicht verbrauchbare und nicht speicherbare Leistung definiert sein kann. Der nicht durch regenerative Energie lieferbare Anteil der geforderten konstanten Ladeleistung wird dann aus dem Versorgungsnetz bezogen. Die Ladeleistung bleibt entsprechend konstant und das Ladeende lässt sich somit vorteilhafterweise planen.

Bei einer weiteren besonders vorteilhaften Ausgestaltung der Erfindung weist die Ladeeinrichtung einen zweiten Lademodus auf und ist in dem zweiten Lademodus und in einem mit der Energiequelle und dem Kraftfahrzeug gekoppelten Zustand dazu ausgelegt, eine variable Ladeleistung in Abhängigkeit von der durch die Energiequelle aktuell maximal bereitstellbaren regenerativen Energiemenge zum Laden des Energiespeichers bereitzustellen.

Dabei ist es weiterhin besonders vorteilhaft, wenn der erste und der zweite Lademodus einem Benutzer des Kraftfahrzeugs zur Auswahl angeboten werden. Mit anderen Worten kann der Benutzer oder Besitzer des Kraftfahrzeugs, der seinen Energiespeicher des Kraftfahrzeugs an der Ladeeinrichtung laden möchte, zwischen dem ersten und zweiten Lademodus auswählen. In dem beschriebenen zweiten Lademodus wird die Energie zum Laden des Energiespeichers des Kraftfahrzeugs ausschließlich durch regenerative Energie bereitgestellt, was damit besonders kostengünstig und umweltschonend ist. In diesem Fall kann zwar keine konstante Ladeleistung gewährleistet werden, diese wird jedoch immer genau so nachgeregelt, wie aktuell überschüssige regenerative Energie von der Ladeeinrichtung, und insbesondere dieser von der Energiequelle, bereitgestellt werden kann. Somit kann ein Ladender, wenn er dies wünscht, mitunter längere Ladezeiten in Kauf nehmen, deren Ende nicht unmittelbar absehbar ist, zugunsten eines umweltschonenderen und eventuell auch deutlich kostengünstigeren Ladens. Ein Benutzer eines Kraftfahrzeugs hat damit vorteilhafterweise selbst die Wahlmöglichkeit, wodurch die Ladeeinrichtung dem Benutzer letztendlich das höchste Maß an Flexibilität und Effizienz bietet.

Erfindungsgemäß weist die Ladeeinrichtung eine Kommunikationseinheit auf, die dazu ausgelegt ist, mit einer der Energiequelle zugeordneten Kommunikationseinheit zu kommunizieren. Diese Kommunikationsmöglichkeit kann auf vielfältige Weise genutzt werden. Besonders vorteilhaft ist es dabei, dass die Ladeeinrichtung dazu ausgelegt ist, im ersten Modus die vorgebbare Ladeleistung in Form des am Energiebezugs-Anschluss durch die Energiequelle maximal bereitstellbaren Anteils der regenerativen Energie und des zweiten Leistungsanteils in Form der aus dem Stromnetz zu beziehenden Energie anzufordern. Umgekehrt kann natürlich auch die Energiequelle über ihre zugeordnete Kommunikationseinheit der Ladeeinrichtung mitteilen, welche Höhe der aktuell am Energiebezugs-Anschluss bereitstellbare erste und zweite Ladeleistungsanteil hat. Diese Information kann die Ladeeinrichtung wiederum verwenden, um sie zum Beispiel durch eine Anzeigeeinrichtung anzuzeigen, wie dies später näher erläutert wird. Entsprechend ist die Ladeeinrichtung vorzugsweise auch dazu ausgelegt, mittels ihrer Kommunikationseinheit auch im zweiten Lademodus die regenerative Energie von der Energiequelle anzufordern, insbesondere ausschließlich regenerative Energie. Die Energiequelle kann daraufhin die angeforderte regenerative Energie, wie diese maximal als überschüssige Energie vorliegt, am Energiebezugs-Anschluss bereitstellen und insbesondere auch die aktuelle Höhe dieser regenerativen Energie beziehungsweise die Höhe des ersten Leistungsanteils der Ladeeinrichtung über die Kommunikationseinheit mitteilen, sodass die Ladeeinrichtung vorteilhafterweise die aktuelle Ladeleistung zum Laden des Energiespeichers anpassen kann.

Weiterhin ist es auch vorteilhaft, wenn die Ladeeinrichtung eine Kommunikationseinheit aufweist, die insbesondere keine separate Kommunikationseinheit darstellen muss, sondern mit der oben genannten identisch sein kann, und welche dazu ausgelegt ist, mit einer zentralen Datenverarbeitungseinrichtung zum kommunizieren, und in Abhängigkeit von einem von der zentralen Datenverarbeitungseinrichtung gesendeten und durch die Kommunikationseinheit empfangenen Freischaltungssignal einen Ladevorgang zum Laden des Energiespeichers freizuschalten. Diese Weiterbildung ist besonders vorteilhaft, wenn die Ladeeinrichtung als halböffentliche Ladeeinrichtung auch von anderen Personen als dem Besitzer der Ladeeinrichtung selbst genutzt werden soll. Dies erlaubt es nämlich, die jeweiligen anderen Personen für das Laden ihrer Kraftfahrzeuge zu autorisieren. Solche anderen Benutzer der Kraftfahrzeuge können sich beispielsweise bei einem entsprechenden Internetdienst, der über die zentrale Datenverarbeitungseinrichtung bereitgestellt wird, anmelden, Zahlungsmöglichkeiten hinterlegen oder ähnliches. Möchte dann ein solcher registrierter Benutzer an der Ladeeinrichtung laden, so kann der Benutzer beispielsweise die Ladeeinrichtung über sein mobiles Kommunikationsgerät oder ein anderes Kommunikationsmittel, insbesondere internetfähiges Kommunikationsmittel, freischalten lassen. Zu diesem Zweck kann das diesem Benutzer zugeordnete Endgerät eine Freischaltungsanfrage an die zentrale Datenverarbeitungseinrichtung übermitteln. Diese kann beispielsweise überprüfen, ob gültige Zahlungsmittel hinterlegt sind und/oder andere Berechtigungen vorliegen. Wird entsprechend der Benutzer als autorisierter Benutzer von der zentralen Datenverarbeitungseinrichtung eingestuft, so kann diese dann entsprechend ein Freischaltungssignal an die Ladeeinrichtung übermitteln, welche daraufhin das Laden des Energiespeichers des Benutzers freigibt.

Eine solche Autorisierung einer anderen Person als dem Besitzer der Ladeeinrichtung kann beispielsweise auch nur dann erforderlich sein, wenn für den Strombezug zum Laden ein Entgelt an den Besitzer der Ladeeinrichtung entrichtet werden soll. Beispielsweise kann es vorgesehen sein, dass für das Laden des Kraftfahrzeugs gemäß dem zweiten Lademodus, bei welchem nur die überschüssige regenerative Energie genutzt werden kann, gar kein Entgelt vorgesehen ist, und diese regenerative Energie gratis bezogen werden kann. In diesem Fall ist es auch möglich, dass eine solche andere Person einfach ihr Kraftfahrzeug an der Ladeeinrichtung Laden kann, ohne vorherige Registrierung bei irgendeinem Dienst oder Autorisierung oder Freischaltung durch diesen Dienst.

Die zentrale Datenverarbeitungseinrichtung kann dabei im Allgemeinen ein Internetserver beziehungsweise Cloudserver, wie beispielsweise einen Serviceprovider, darstellen. Die zentrale Datenverarbeitungseinrichtung kann aber auch mehrere Server, insbesondere auch mehrere verschiedene Serviceprovider, umfassen. Solche Serviceprovider können zum Beispiel einen Ladepunktbetreiber darstellen, der an Interessenten beziehungsweise andere Benutzer Informationen über die Standorte solcher registrierten Ladepunkte beziehungsweise Ladeeinrichtungen bereitstellt, sowie Zusatzinformationen über solche Ladeeinrichtungen, wie zum Beispiel Steckertyp, der mit einer solchen Ladeeinrichtung gekoppelt werden kann, bereitstellbare Leistungen oder ähnliches. Ein weiterer Serviceprovider kann beispielsweise für die Autorisierung und/oder Abrechnung der Nutzung der betreffenden Ladeeinrichtungen zuständig sein. Die beiden Serviceprovider können ebenfalls kommunikativ miteinander gekoppelt sein. Die Autorisierung beziehungsweise Abrechnung muss aber nicht notwendigerweise über einen Onlinedienst erfolgen, sondern kann beispielsweise auch lokal durch eine Autorisierungs- und Zahleinrichtung an der Ladeeinrichtung selbst bereitgestellt sein. Die Autorisierung und/oder Zahlung über eine zentrale Datenverarbeitungseinrichtung sowie zusätzlich auch die Möglichkeit der Lokalisierung verfügbarer öffentlicher und halböffentlicher solcher Ladeeinrichtungen über eine zentrale Datenverarbeitungseinrichtung ist jedoch für die Endverbraucher besonders einfach und komfortabel.

Bei einer weiteren vorteilhaften Ausgestaltung der Erfindung weist die Ladeeinrichtung eine Anzeigeeinrichtung auf und ist dazu ausgelegt, mindestens eine aktuelle, ladebezogene Zustandsinformation auf der Anzeigeeinrichtung anzuzeigen. Damit wird ein Benutzer, der sein Kraftfahrzeug an der Ladeeinrichtung laden möchte oder lädt, über die aktuellen Zustandsinformationen, die diesen Ladevorgang betreffen, informiert.

Bei einer weiteren vorteilhaften Ausgestaltung der Erfindung ist die Ladeeinrichtung dazu ausgelegt, mindestens eine aktuelle, ladebezogene Zustandsinformation an eine zentrale Datenverarbeitungseinrichtung, insbesondere die oben beschriebene zentrale Datenverarbeitungseinrichtung, zu übermitteln. Diese kann diese bereitgestellte Zustandsinformation an andere Nutzer, zum Beispiel über ihre mobilen Kommunikationsgeräte oder andere zugeordnete Endgeräte, übermitteln. Dadurch können vorteilhafterweise andere Benutzer auch auf ihren mobilen Kommunikationsgeräten über die betreffenden ladebezogenen Zustandsinformationen informiert werden. Solche Informationen können den Benutzer entsprechend auch dann bereitgestellt werden, wenn diese sich noch nicht an der Ladeeinrichtung befinden oder sich während des Ladens irgendwo anders aufhalten.

Dabei ist es weiterhin besonders vorteilhaft, wenn die mindestens eine aktuelle, ladebezogene Zustandsinformation mindestens eine der folgenden Zustandsinformationen darstellt: Einen aktuellen Belegungszustand der Ladeeinrichtung, eine aktuelle ausschließlich durch regenerative Energie bereitstellbare Ladeleistung, insbesondere die Höhe des ersten Leistungsanteils, die aktuelle Höhe des zweiten Leistungsanteils und eine prognostizierte Restladezeit. Bei diesen Informationen handelt es sich also einerseits um Informationen, die besonders nützlich sind, bevor ein Benutzer die Ladeeinrichtung zum Laden anfährt, wie dies zum Beispiel beim aktuellen Belegungszustand der Ladeeinrichtung der Fall ist, als auch um Informationen, die während des Ladens von besonderem Interesse sind, wie zum Beispiel die prognostizierte Restladezeit. Weitere Informationen, zum Beispiel die Höhe des ersten und zweiten Leistungsanteils, der aktuell bereitgestellt werden kann, ist ebenfalls vor dem Anfahren der betreffenden Ladeeinrichtung als auch während des Ladens von Interesse für den betreffenden Benutzer.

Diese vorteilhaften Informationen können also entsprechend einem Benutzer sowohl an der Ladeeinrichtung direkt angezeigt werden als auch über sein mobiles Kommunikationsgerät, nämlich dann, wenn die Ladeeinrichtung diese Informationen an die zentrale Datenverarbeitungseinrichtung zur Weiterleitung an die betreffenden Endgeräte übermittelt. Weiterhin kann auch die Ladeeinrichtung wiederum kommunikativ mit der Energiequelle gekoppelt sein, um zumindest manche dieser Informationen zu beziehen, wie zum Beispiel die Höhe, insbesondere aktuelle Höhe, des ersten und zweiten Leistungsanteils. Ein Benutzer kann sich dann beispielsweise auf seinem mobilen Kommunikationsgerät, insbesondere auf einer dort dargestellten Karte, die nächstliegenden Lageeinrichtungen bezüglich seines aktuellen Standorts, eines Zielstandorts oder entlang einer Route anzeigen lassen, und entsprechend eine auswählen, die seinen Bedürfnissen und Wünschen am nächsten kommt, zum Beispiel diejenige mit der höchsten bereitstellbaren ersten Ladeleistung oder die räumlich nächste, diejenige mit dem günstigsten Preis oder ähnliches.

Des Weiteren betrifft die Erfindung auch ein System mit einer erfindungsgemäßen Ladeeinrichtung oder eine ihrer Ausgestaltungen, und der mit der Ladeeinrichtung über den Energiebezugs-Anschluss koppelbaren Energiequelle.

Die mit Bezug auf die erfindungsgemäße Ladeeinrichtung und ihre Ausgestaltungen genannten Vorteile gelten in gleicher Weise für das erfindungsgemäße System. Weiterhin kann das erfindungsgemäße System auch weitere Komponenten umfassen, die mit Bezug auf die Beschreibung der erfindungsgemäßen Ladeeinrichtung und ihren Ausgestaltungen genannt wurden, wie zum Beispiel die zentrale Datenverarbeitungseinrichtung.

Des Weiteren betrifft die Erfindung auch ein Verfahren zum Steuern einer Ladeeinrichtung, welche zum elektrischen Laden eines Energiespeichers eines Kraftfahrzeugs mit dem Kraftfahrzeug koppelbar ist und die einen Energiebezugs-Anschluss zum Koppeln mit einer Energiequelle aufweist, die dazu ausgelegt ist, erzeugte regenerative Energie und aus einem öffentlichen Versorgungsstromnetz beziehbare Energie am Energiebezugs-Anschluss der Ladeeinrichtung bereitzustellen, wobei die Energiequelle eine Energieerzeugungseinrichtung zur Erzeugung der regenerativen Energie aufweist, und eine Anschlusseinrichtung zum Koppeln mit dem öffentlichen Versorgungs-Stromnetz aufweist. Dabei weist die Ladeeinrichtung einen ersten Lademodus auf und stellt in dem ersten Lademodus und in einem mit der Energiequelle und dem Kraftfahrzeug gekoppelten Zustand eine vorgebbare konstante Ladeleistung zum Laden des Energiespeichers bereit, deckt in dem ersten Lademodus die vorgebbare konstante Ladeleistung so weit wie möglich durch regenerative Energie und stellt nur im Fall, dass die vorgebbare Ladeleistung nur zum Teil, aber nicht ausschließlich, durch die am Energiebezugs-Anschluss bereitstellbare regenerative Energie bereitstellbar ist, einen ersten Leistungsanteil in Form von regenerativer Energie und einen zweiten Leistungsanteil in Form von aus dem Stromnetz bezogener Energie gleichzeitig zum Laden des Energiespeichers bereit. Dabei ist der erste Leistungsanteil in Form eines am Energiebezugs-Anschluss durch die Energiequelle maximal bereitstellbaren Anteils der regenerativen Energie zum Laden des Energiespeichers bereitgestellt, und die Ladeeinrichtung weist eine Kommunikationseinheit auf, die mit einer der Energiequelle zugeordneten Kommunikationseinheit kommuniziert und im ersten Lademodus die vorgebbare Ladeleistung in Form des am Energiebezugs-Anschluss durch die Energiequelle maximal bereitstellbaren Anteils der regenerativen Energie und des zweiten Leistungsanteils in Form der aus dem Stromnetz zu beziehenden Energie anfordert.

Auch hier gelten die mit Bezug auf die erfindungsgemäße Ladeeinrichtung und ihren Ausgestaltungen genannten Vorteile in gleicher Weise für das erfindungsgemäße Verfahren.

Darüber hinaus ermöglichen die im Zusammenhang mit der erfindungsgemäßen Ladeeinrichtung und ihren Ausgestaltungen genannten gegenständlichen Merkmale die Weiterbildung des erfindungsgemäßen Verfahrens durch weitere korrespondierende Verfahrensschritte.

Die Erfindung umfasst auch die Kombinationen der Merkmale der beschriebenen Ausführungsformen.

Im Folgenden sind Ausführungsbeispiele der Erfindung beschrieben.

Bei den im Folgenden erläuterten Ausführungsbeispielen handelt es sich um bevorzugte Ausführungsformen der Erfindung. Bei den Ausführungsbeispielen stellen die beschriebenen Komponenten der Ausführungsformen jeweils einzelne, unabhängig voneinander zu betrachtende Merkmale der Erfindung dar, welche die Erfindung jeweils auch unabhängig voneinander weiterbilden. Daher soll die Offenbarung auch andere als die dargestellten Kombinationen der Merkmale der Ausführungsformen umfassen. Des Weiteren sind die beschriebenen Ausführungsformen auch durch weitere der bereits beschriebenen Merkmale der Erfindung ergänzbar.

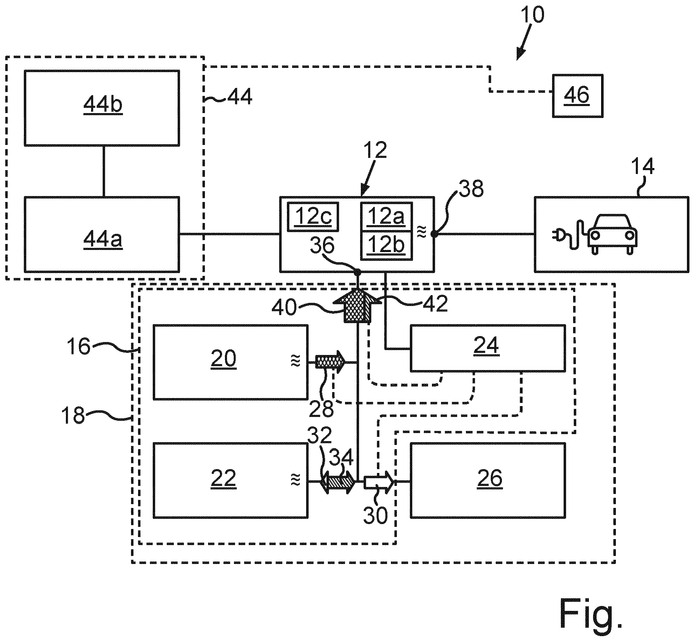

Hierzu zeigt die einzige Figur eine schematische Darstellung eines Systems 10 mit einer Ladeeinrichtung zum Laden eines Energiespeichers eines Kraftfahrzeugs 14 gemäß einem Ausführungsbeispiel der Erfindung. Das System 10 weist dabei weiterhin eine Energiequelle 16 auf, die in diesem Beispiel Teil eines Haushalts 18 ist. Diese Energiequelle 16 umfasst dabei in diesem Beispiel eine PV-Anlage 20, zu welcher auch ein entsprechender Speicher zum zumindest Zwischenspeichern der von der PV-Anlage 20 bereitgestellten regenerativen Energie zugeordnet sein kann, hier jedoch aus Gründen der Übersichtlichkeit nicht explizit dargestellt ist, sowie eine Anschlusseinrichtung 22 zum Koppeln mit einem öffentlichen Versorgungsstromnetz, wie beispielsweise eine Haushaltssteckdose oder ähnliches. Weiterhin kann die Energiequelle 16 auch eine Steuereinheit 24 aufweisen, welche beispielsweise in Form eines Heim-Energie-Management-Systems und/oder eines Messwertgebers bereitgestellt sein kann. Weiterhin umfasst der Haushalt 18 in diesem Beispiel auch noch weitere Verbraucher 26. Die Steuereinheit 24 ist mit der Photovoltaikanlage 20 gekoppelt und kann darüber entsprechende Informationen beziehen, wie viel regenerative Energie, die in diesem Beispiel durch den Pfeil 28 dargestellt ist, von der Photovoltaikanlage 20 bereitgestellt werden kann. Darüber hinaus kann die Steuereinheit 24 auch Informationen darüber beziehen, wie viel Energie die Verbraucher 26 aktuell benötigen. Kann die Energie, welche die Verbraucher 26 benötigen, welche im Übrigen durch den Pfeil 30 veranschaulicht ist, aktuell nicht allein durch die regenerative Energie 28 gedeckt werden, so kann zusätzlich Strom aus dem öffentlichen Stromnetz über den Haushaltsanschluss 22 bezogen werden. Ist dagegen regenerative Energie 28 überschüssig, das heißt kann diese weder im Energiespeicher, welcher der Photovoltaikanlage 20 zugeordnet ist, gespeichert werden, weil dieser aktuell bereits voll geladen ist, noch durch die Verbraucher 26 verbraucht werden, so wird diese überschüssige Energie 28 bei herkömmlichen Haushalten 18 typischerweise wieder in das öffentliche Netz eingespeist, insbesondere wiederum über den Haushaltsanschluss 22. Dieses Einspeisen ist durch den Teilpfeil 32 veranschaulicht, während das Beziehen von Energie aus dem öffentlichen Stromnetz mit 34 bezeichnet ist.

Die Ladeeinrichtung 12 gemäß einem Ausführungsbeispiel der Erfindung weist nun einen Energiebezugs-Anschluss 36 auf, über welchen die Ladeeinrichtung 12 mit der Energiequelle 16 koppelbar ist, um von dieser Energie zu beziehen. Die über den Energiebezugs-Anschluss 36 bereitgestellte Energie kann dann vorteilhafterweise einem Kraftfahrzeug 14 bereitgestellt werden, welches über einen entsprechenden Ladeanschluss 38 mit der Ladeeinrichtung 12 koppelbar ist. Der große Vorteil der Ladeeinrichtung 12 liegt jedoch nun gerade darin, dass die Ladeeinrichtung 12 dabei einen Modus, nämlich einen ersten Lademodus, aufweist, in welchem dem Kraftfahrzeug 14 zum Laden seines Energiespeichers eine konstante, optional auch vom Benutzer des Kraftfahrzeugs 14 wählbare, Ladeleistung während des Ladevorgangs bereitgestellt wird und wobei andererseits in diesem ersten Lademodus diese konstante Ladeleistung so weit wie möglich durch regenerative Energie 28 gedeckt wird und nur im Fall, dass die vorgegebene Ladeleistung nur zum Teil, aber nicht ausschließlich, durch diese durch die Photovoltaikanlage 20 bereitgestellte regenerative Energie 28 am Energiebezugs-Anschluss 36 bereitstellbar ist, ein erster Leistungsanteil 40 in Form von regenerativer Energie 28 bereitgestellt wird und ein zweiter Leistungsanteil 42 in Form von aus dem Stromnetz bezogener Energie, das heißt über den Netzanschluss 22 bereitgestellte Energie, zum Laden des Energiespeichers des Kraftfahrzeugs 14 bereitgestellt wird. Dabei wird vorzugsweise als erster Leistungsanteil 40 nur die im Haushalt 18 vorhandene überschüssige regenerative Energie 28 verwendet, welche also vorzugsweise nicht speicherbar und durch die Verbraucher 26 nicht verbrauchbar ist. Dabei kann es auch sein, dass die gesamte konstante Ladeleistung allein auf Basis dieser regenerativen Energie 28 in Form des ersten Leistungsanteils 40 bereitgestellt werden kann, sodass der zweite Leistungsanteil 42 auch vollständig entfallen kann.

Je nachdem, wie die Höhe des ersten Leistungsanteils 40 im Laufe der Ladedauer des Kraftfahrzeugs 14 variiert, kann entsprechend die Höhe des zweiten Leistungsanteils 42, der aus dem Stromnetz bezogen wird, angepasst werden, um immer die konstante, dem Kraftfahrzeug 14 bereitstellbare, Ladeleistung bereitzustellen, zumindest im beschriebenen ersten Lademodus. Darüber hinaus kann die Ladeeinrichtung 12 auch noch einen zweiten Lademodus aufweisen, wobei auch hier dem Benutzer des Kraftfahrzeugs 14 die Wahl überlassen sein kann, ob er sein Kraftfahrzeug 14 gemäß dem ersten Lademodus oder dem zweiten Lademodus laden möchte.

Im zweiten Lademodus dagegen wird zum Laden des Kraftfahrzeugs 14 ausschließlich regenerative Energie 28 verwendet, die wiederum nur in Form der überschüssigen Energie am Energiebezugs-Anschluss 36 bereitgestellt wird. Je nachdem, wie viel regenerative Energie 28 in Form von überschüssiger Energie aktuell zum Laden zur Verfügung steht, wird entsprechend die Ladeleistung zum Laden des Kraftfahrzeugs 14 angepasst, insbesondere durch die Ladeeinrichtung 12 beziehungsweise durch eine von der Ladeeinrichtung 12 bereitgestellte Ladesteuereinheit 12a. Die Ladeeinrichtung 12 kann im zweiten Lademodus die angebotene Ladeleistung entsprechend situationsbezogen zum Beispiel von 1,4 Kilowatt bis 22 Kilowatt regeln oder gemäß dem ersten Lademodus gegen Gebühr beziehungsweise Mehrkosten auch eine konstante Leistung liefern.

Weiterhin kann die Ladeeinrichtung 12 auch ein Kommunikationsmodul 12b bzw. eine Kommunikationseinheit 12b aufweisen. Mittels dieses Kommunikationsmoduls 12b kann die Ladeeinrichtung 12 mit der Steuereinheit 24 der Energiequelle 16 beziehungsweise des Haushalts 18 kommunizieren und je nach Lademodus die gewünschte Energie anfordern. Die Kommunikation mit der Steuereinheit 24 durch die Kommunikationseinheit 12b kann dabei über jeden beliebigen Kommunikationsstandard verlaufen, zum Beispiel unter Verwendung von Kommunikationsprotokollen wie TCP/IP. Diese Kommunikation kann dabei kabelgebunden oder auch drahtlos erfolgen.

In Abhängigkeit von der Anfrage der Ladeeinrichtung 12 kann dann die Steuereinheit 24 ermitteln, wie viel der regenerativen Energie 28 gerade überschüssig ist, insbesondere wiederum in Abhängigkeit des aktuellen Verbrauchs 30 der Verbraucher 26, des Ladezustands des der Photovoltaikanlage 20 zugeordneten Speichers und der aktuell von der Photovoltaikanlage 20 erzeugbaren regenerativen Energie 28. Entsprechend bestimmt die Steuereinheit 24, insbesondere im ersten Lademodus der Ladeeinrichtung 12, die Höhe des ersten Leistungsanteils 40 und die Höhe des zweiten Leistungsanteils 42 und stellt diese Leistungen am Energiebezugs-Anschluss 36 bereit. Im zweiten Lademodus dagegen ermittelt die Steuereinheit 24 einfach die überschüssige regenerative Energie 38 und stellt diese an dem Energiebezugs-Anschluss 36 bereit. Zusätzlich kann die Steuereinheit 24 auch entsprechende Ladeinformationen beziehungsweise Energieinformationen an die Ladeeinrichtung 12 übermitteln, insbesondere an die Kommunikationseinheit 12b, wie zum Beispiel die aktuell zur Verfügung stehende überschüssige regenerative Energiemenge 28 beziehungsweise die Höhe der aktuell zur Verfügung stellbaren Leistung gemäß des ersten Leistungsanteils 40. Die Ladeeinrichtung 12 kann diese Informationen einerseits direkt auf einem Display der Ladeeinrichtung 12 oder im Allgemeinen einer Anzeigeeinrichtung 12c der Ladeeinrichtung 12 anzeigen. Diese und weitere Informationen kann die Ladeeinrichtung 12 aber auch an eine zentrale Datenverarbeitungseinrichtung 44 übermitteln. Zu diesem Zweck kann die Ladeeinrichtung 12 wiederum ihre Kommunikationseinheit 12b verwenden, welche zur Kommunikation mit der zentralen Datenverarbeitungseinrichtung 44 ausgelegt ist. Zur Kommunikation können wiederum Kommunikationsprotokolle wie zum Beispiel TCP/IP verwendet werden. Diese Kommunikation erfolgt jedoch drahtlos und nicht kabelgebunden. Die zentrale Datenverarbeitungseinrichtung 44 kann dabei einen oder mehrere Cloudserver oder Internetserver umfassen, die unter Umständen auch unterschiedlichen Serviceprovidern zugeordnet sein können. In diesem Beispiel ist ein erster Serviceprovider 44a, das heißt ein erster Dienstanbieter 44a, bereitgestellt, wie zum Beispiel ein Ladepunktbetreiber, der die Daten der Ladeeinrichtung 12 sowie weiterer anderer Ladeeinrichtungen 12 verwaltet. Dieser Dienstanbieter 44a steht weiterhin mit einem Dienstanbieter 44b in Kommunikationsverbindung, der beispielsweise für die Autorisierung und Abrechnung zuständig sein kann. Beispielsweise kann durch einen Benutzer des Kraftfahrzeugs 14 beim Ladedienst anmelden und registrieren, insbesondere mittels eines dem Benutzer zugeordneten Endgeräts 46, welches ebenfalls zur Kommunikation mit der zentralen Datenverarbeitungseinrichtung ausgebildet ist. Dieses Endgerät 46 kann zum Beispiel ein mobiles Endgerät, wie zum Beispiel ein Smartphone, eine Tablet oder ähnliches darstellen oder auch ein Heimrechner oder irgendeine andere Kommunikationseinheit. Das Endgerät 46 kann zu diesem Zweck weiterhin eine geeignete App, das heißt ein Anwendungsprogramm, aufweisen oder der gewünschte Dienst kann auch über einen Browser auf dem Endgerät 46 bereitgestellt werden. Auch hier kann die Kommunikation zwischen dem Endgerät 46 und der zentralen Datenverarbeitungseinrichtung 44 wieder über das Internet erfolgen, insbesondere gemäß dem Kommunikationsprototokoll TCP/IP. Über ein solches Endgerät 46 kann sich der Benutzer des Kraftfahrzeugs 14, insbesondere noch vor dem Ladevorgang, nun gewünschte Ladeeinrichtungen 12 in seiner Umgebung auf einer Karte anzeigen lassen. Diese Orte der betreffenden Ladeeinrichtungen 12 sind der zentralen Datenverarbeitungseinrichtung 44 bekannt beziehungsweise durch die Eigentümer der betreffenden Ladeeinrichtungen 12 bekannt gemacht worden. Auch können die entsprechenden Ladeeinrichtungen 12 ihren aktuellen Belegungszustand an die zentrale Datenverarbeitungseinrichtung 44 melden. So kann einem Benutzer des Kraftfahrzeugs 14 ebenfalls auf seinem Endgerät 46 angezeigt werden, welche der Ladeeinrichtungen 12 in seiner Umgebung oder in einem gewünschten geografischen Bereich aktuell belegt sind und welche noch frei sind. Auch können von der Ladeeinrichtung 12 zusätzliche Ladeinformationen an die zentrale Datenverarbeitungseinrichtung bereitgestellt werden, wie zum Beispiel der aktuell durch die Ladeeinrichtung 12 bereitstellbare Grünstromanteil, das heißt die Höhe des ersten Leistungsanteils 40, bereitstellbare Lademodi, zur Verfügung stehende konstante Ladeleistungen, aktuelle voraussichtliche Höhe des zweiten Leistungsanteils 42 im Falle des ersten Lademodus, der Anschlusstyp des Ladesteckers 38 und so weiter. All diese Informationen können dann ebenfalls dem Benutzer auf seinem Endgerät 46 dargestellt werden. Auch Preisinformationen können angezeigt werden. Der über den Autorisierungs- und Abrechnungsdienst 44b registrierte Nutzer kann nun mit seinem Kraftfahrzeug 14 die gewünschte Ladeeinrichtung 12 aufsuchen und sein Kraftfahrzeug 14 laden. Dazu kann er zunächst eine Ladefreigabe mittels seines Endgeräts 46 von der zentralen Datenverarbeitungseinrichtung 44, insbesondere wiederum über den Autorisierungs- und Abrechnungsdienst 44b, anfordern. Dieser Dienst 44b kann den Benutzer des Endgeräts 46 als registrierten und autorisierten Benutzer identifizieren und damit diese Autorisierung an den Dienst 44a melden, welcher daraufhin eine Freigabeaufforderung an die Ladeeinrichtung 12 übermittelt. Diese schaltet daraufhin den Ladevorgang frei und ermöglicht dem Benutzer des Kraftfahrzeugs 14 damit, sein Kraftfahrzeug über den Ladeanschluss 38 gemäß dem gewählten Modus zu laden.

Je nach gewählten Lademodus kann also das Elektrofahrzeug 14 entweder überschüssige PV-Energie aus der Ladeeinrichtung 12, wie zum Beispiel einer Wallbox beziehen. Je nach Vergütungsmodell kann es zum Beispiel auch vorgesehen sein, dass gerade dieser Grünstromanteil unentgeltlich, das heißt für den Nutzer des Kraftfahrzeugs 14 gratis, bezogen werden kann. In diesem Fall ist noch nicht einmal eine Anmeldung seitens des Nutzers des Kraftfahrzeugs 14 beim genannten Dienst 44b, 44a erforderlich. Der Benutzer des Kraftfahrzeugs 14 kann zum Beispiel einfach eine Ladeeinrichtung 12 aufsuchen und dann gemäß dem zweiten Lademodus sein Kraftfahrzeug nur mit diesem dort gratis zur Verfügung stehenden überschüssigen Grünstrom laden. Dabei wird, unabhängig ob gratis oder ebenfalls gegen Entgelt, gemäß dem zweiten Lademodus dann nur so viel PV-Energie geliefert, wie nicht im Haushalt 18 verbraucht oder gespeichert werden kann. Die Ladeleistung und damit die Ladedauer sind dabei unbestimmt. Gemäß dem ersten Lademodus kann der Nutzer des Kraftfahrzeugs 14 nach Anmeldung zum Beispiel mit seiner Smartphone-App eine konstante Leistung beziehen. Entsprechend liefert die Ladeeinrichtung 12, wie beispielsweise die Wallbox, die gewünschte beziehungsweise ausgewählte oder vorgegebene konstante Ladeleistung, wie zum Beispiel 11 Kilowatt oder 22 Kilowatt Leistung. Dabei wird der nicht durch PV-Erzeugung gelieferte Energieanteil aus dem Versorgungsnetz bezogen und entsprechend dem Benutzer des Kraftfahrzeugs 14 in Rechnung gestellt. Beide Energiemengen, nämlich Grünstrom und Netzstrom, werden dabei getrennt ausgewiesen, so dass die Menge des bezogenen Grünstroms gemäß einem für den Grünstrom vorgegebenen Tarif abgerechnet werden kann die Menge des bezogenen Netzstroms gemäß einem für den Netzstrom vorgegebenen anderen Tarif abgerechnet werden kann. Gemäß diesem ersten Lademodus ist die Ladeleistung vorteilhafterweise konstant und das Ladeende lässt sich so nicht planen. Auch die voraussichtliche Ladedauer kann so dem Benutzer, über die Ladeeinrichtung 12 oder seine App auf dem Endgerät 46, angezeigt werden. Zusätzlich zu dem üblichen Haushaltstarif kann ein Preisaufschlag vorgesehen sein, welches es dem Wallbox-Betreiber beziehungsweise Besitzer der Ladeeinrichtung 12 ermöglicht, seine Anschaffungskosten in absehbarer Zeit zu amortisieren. Damit ist einem Hausbesitzer und Inhaber einer solchen Ladeeinrichtung 12 ausreichend Anreiz geboten, um seine überschüssige Energie auch anderen Nutzern in Form einer halböffentlichen Lademöglichkeit bereitzustellen.

So können insgesamt Verbesserungen hinsichtlich der Verbreitung von halböffentlichen Lademöglichkeiten durch Verkauf einer preiswerten Ladeeinrichtung, wie einer Wallbox, erreicht werden, die sowohl überschüssige erneuerbare Energie als auch Haushaltsstrom bereitstellen kann, und zwar gleichzeitig in jeweiliger Ergänzung zueinander gemäß dem ersten Lademodus. Dies bietet einen großen Vorteil für Besitzer eines Elektrofahrzeugs als auch für die Betreiber von neuen oder zukünftigen PV-Anlagen. Somit kann überschüssige erneuerbare Energie sinnvoll verwendet werden und das Angebot an regenerativem Fahrstrom in der Fläche deutlich unterstützt werden. Vor allem lässt sich eine solch hochwertige Ladeinfrastruktur auf einfache Weise auch als After-Sales-Produkt bereitstellen.

Insgesamt zeigen die Beispiele, wie durch die Erfindung eine intelligente Nutzung von erneuerbarer Energie in Verbindung mit Haushaltsstrom zum halböffentlichen Laden von Elektrofahrzeugen bereitgestellt werden kann, mittels welcher je nach Anwendungsfall ausschließlich mit vorhandener regenerativer Energie oder mit konstanter Gesamtleistung unter Verwendung möglichst vieler regenerativer Energie geladen werden kann, wodurch eine besonders flexible, effiziente Nutzung regenerativer Energie sowie ein besonders hoher Nutzungs- und Bedienkomfort bereitgestellt werden kann.

## Patentansprüche

1. Ladeeinrichtung (12) zum Koppeln mit einem Kraftfahrzeug (14) zum elektrischen Laden eines Energiespeichers des Kraftfahrzeugs (14),
- wobei die Ladeeinrichtung (12) einen Energiebezugs-Anschluss (36) zum Koppeln mit einer Energiequelle (16) aufweist, wobei die Energiequelle (16) dazu ausgelegt ist, erzeugte regenerative Energie (28) und aus einem öffentlichen Versorgungs-Stromnetz beziehbare Energie (34) am Energiebezugs-Anschluss (36) der Ladeeinrichtung (12) bereitzustellen,
- wobei die Energiequelle (16) eine Energieerzeugungseinrichtung (20) zur Erzeugung der regenerativen Energie (28) aufweist, und eine Anschlusseinrichtung (22) zum Koppeln mit dem öffentlichen Versorgungs-Stromnetz aufweist,
- wobei die Ladeeinrichtung (12) einen ersten Lademodus aufweist und in dem ersten Lademodus und in einem mit der Energiequelle (16) und dem Kraftfahrzeug (14) gekoppelten Zustand dazu ausgelegt ist, eine vorgebbare konstante Ladeleistung zum Laden des Energiespeichers bereitzustellen,
**dadurch gekennzeichnet, dass**
- die Ladeeinrichtung (12) in dem ersten Lademodus weiter dazu ausgelegt ist, die vorgebbare konstante Ladeleistung so weit wie möglich durch regenerative Energie (28) zu decken und nur im Fall, dass die vorgebbare Ladeleistung nur zum Teil aber nicht ausschließlich durch die am Energiebezugs-Anschluss (36) bereitstellbare regenerative Energie (28) bereitstellbar ist, einen ersten Leistungsanteil (40) in Form von regenerativer Energie (28) und einen zweiten Leistungsanteil (42) in Form von aus dem Versorgungs-Stromnetz bezogener Energie (34) gleichzeitig zum Laden des Energiespeichers bereitzustellen,
- wobei der erste Leistungsanteil (40) in Form eines am Energiebezugs-Anschluss (36) durch die Energiequelle (16) maximal bereitstellbaren Anteils (40) der regenerativen Energie (28) zum Laden des Energiespeichers bereitstellbar ist, und
- wobei die Ladeeinrichtung (12) eine Kommunikationseinheit (12b) aufweist, die dazu ausgelegt ist, mit einer der Energiequelle (16) zugeordneten Kommunikationseinheit (24) zu kommunizieren und im ersten Lademodus die vorgebbare Ladeleistung in Form des am Energiebezugs-Anschluss (36) durch die Energiequelle (16) maximal bereitstellbaren Anteils (40) der regenerativen Energie (28) und des zweiten Leistungsanteils (42) in Form der aus dem Stromnetz zu beziehenden Energie (34) anzufordern.

2. Ladeeinrichtung (12) nach Anspruch 1,
**dadurch gekennzeichnet, dass**
die Ladeeinrichtung (12) einen zweiten Lademodus aufweist und in dem zweiten Lademodus und in einem mit der Energiequelle (16) und dem Kraftfahrzeug (14) gekoppelten Zustand dazu ausgelegt ist, eine variable Ladeleistung in Abhängigkeit von der durch die Energiequelle (16) aktuell maximal bereitstellbaren regenerativen Energiemenge (40) zum Laden des Energiespeichers bereitzustellen.

3. Ladeeinrichtung (12) nach einem der vorhergehenden Ansprüche,
**dadurch gekennzeichnet, dass**
die Kommunikationseinheit (12b) dazu ausgelegt ist, mit einer zentralen Datenverarbeitungseinrichtung (44) zu kommunizieren, und in Abhängigkeit von einem von der zentralen Datenverarbeitungseinrichtung (44) gesendeten und durch die Kommunikationseinheit (12b) empfangenen Freischaltungssignal einen Ladevorgang zum Laden des Energiespeichers freizuschalten.

4. Ladeeinrichtung (12) nach einem der vorhergehenden Ansprüche,
**dadurch gekennzeichnet, dass**
die Ladeeinrichtung (12) eine Anzeigeeinrichtung (12c) aufweist und dazu ausgelegt ist, mindestens eine aktuelle, ladebezogene Zustandsinformation auf der Anzeigeeinrichtung (12c) anzuzeigen.

5. Ladeeinrichtung (12) nach einem der vorhergehenden Ansprüche,
**dadurch gekennzeichnet, dass**
die Ladeeinrichtung (12) dazu ausgelegt ist, mindestens eine aktuelle, ladebezogene Zustandsinformation (40, 42) an eine zentrale Datenverarbeitungseinrichtung (44) zu übermitteln.

6. Ladeeinrichtung (12) nach einem der Ansprüche 4 oder 5,
**dadurch gekennzeichnet, dass**
die mindestens eine aktuelle, ladebezogene Zustandsinformation (40, 42) mindestens eine der folgenden Zustandsinformationen (40, 42) darstellt:
- einen aktuellen Belegungszustand der Ladeeinrichtung (12);
- eine aktuelle ausschließlich durch regenerative Energie (28) bereitstellbare Ladeleistung (40);
- die aktuelle Höhe des zweiten Leistungsanteils (42); und
- eine prognostizierte Restladezeit.

7. System (10) mit einer Ladeeinrichtung (12) nach einem der vorhergehenden Ansprüche und der mit der Ladeeinrichtung (12) über den Energiebezugs-Anschluss (36) koppelbaren Energiequelle (16).

8. Verfahren zum Steuern einer Ladeeinrichtung (12),
- welche zum elektrischen Laden eines Energiespeichers eines Kraftfahrzeugs (14) mit dem Kraftfahrzeug (14) koppelbar ist, und
- die einen Energiebezugs-Anschluss (36) zum Koppeln mit einer Energiequelle (16) aufweist, wobei die Energiequelle (16) dazu ausgelegt ist, erzeugte regenerative Energie (28) und aus einem öffentlichen Versorgungs-Stromnetz beziehbare Energie (34) am Energiebezugs-Anschluss (36) der Ladeeinrichtung (12) bereitzustellen,
- wobei die Energiequelle (16) eine Energieerzeugungseinrichtung (20) zur Erzeugung der regenerativen Energie (28) aufweist, und eine Anschlusseinrichtung (22) zum Koppeln mit dem öffentlichen Versorgungs-Stromnetz aufweist, und
- wobei die Ladeeinrichtung (12) einen ersten Lademodus aufweist und in dem ersten Lademodus und in einem mit der Energiequelle (16) und dem Kraftfahrzeug (14) gekoppelten Zustand eine vorgebbare konstante Ladeleistung zum Laden des Energiespeichers bereitstellt,
**dadurch gekennzeichnet, dass**
- die Ladeeinrichtung (12) in dem ersten Lademodus die vorgebbare konstante Ladeleistung so weit wie möglich durch regenerative Energie (28) deckt und nur im Fall, dass die vorgebbare Ladeleistung nur zum Teil aber nicht ausschließlich durch die am Energiebezugs-Anschluss (36) bereitstellbare regenerative Energie (28) bereitstellbar ist, einen ersten Leistungsanteil (40) in Form von regenerativer Energie (28) und einen zweiten Leistungsanteil (42) in Form von aus dem Versorgungs-Stromnetz bezogener Energie (34) gleichzeitig zum Laden des Energiespeichers bereitstellt,
- wobei der erste Leistungsanteil (40) in Form eines am Energiebezugs-Anschluss (36) durch die Energiequelle (16) maximal bereitstellbaren Anteils (40) der regenerativen Energie (28) zum Laden des Energiespeichers bereitgestellt ist, und
- wobei die Ladeeinrichtung (12) eine Kommunikationseinheit (12b) aufweist, die mit einer der Energiequelle (16) zugeordneten Kommunikationseinheit (24) kommuniziert und im ersten Lademodus die vorgebbare Ladeleistung in Form des am Energiebezugs-Anschluss (36) durch die Energiequelle (16) maximal bereitstellbaren Anteils (40) der regenerativen Energie (28) und des zweiten Leistungsanteils (42) in Form der aus dem Stromnetz zu beziehenden Energie (34) anfordert.

## Claims

1. Charging device (12) for coupling to a motor vehicle (14) in order to electrically charge an energy store of the motor vehicle (14),
- wherein the charging device (12) has an energy intake connection (36) for coupling to an energy source (16), wherein the energy source (16) is designed to provide generated regenerative energy (28) and energy (34) that can be obtained from a public power supply grid to the energy intake connection (36) of the charging device (12),
- wherein the energy source (16) has an energy generating device (20) for generating the regenerative energy (28), and a connection device (22) for coupling to the public power supply grid,
- wherein the charging device (12) has a first charging mode and, in the first charging mode and in a state in which it is coupled to the energy source (16) and the motor vehicle (14), is designed to provide a predefinable constant charging power for charging the energy store,
**characterised in that**
- the charging device (12), in the first charging mode, is further designed to cover the predefinable constant charging power as far as possible with regenerative energy (28), and only in the event that the predefinable charging power can only partially but not exclusively be provided by the regenerative energy (28) that can be provided at the energy intake connection (36), to simultaneously provide a first proportion of power (40) in the form of regenerative energy (28) and a second proportion of power (42) in the form of energy (34) obtained from the power supply grid in order to charge the energy store.
- wherein the first proportion of power (40) can be provided in the form of a maximum proportion (40) of the regenerative energy (28) that can be provided at the energy intake connection (36) by the energy source (16) for charging the energy store, and
- wherein the charging device (12) has a communication unit (12b) which is designed to communicate with a communication unit (24) associated with the energy source (16) and, in the first charging mode, to request the predefinable charging power in the form of the maximum proportion (40) of the regenerative energy (28) that can be provided at the energy intake connection (36) by the energy source (16) and the second proportion of power (42) in the form of the energy (34) to be obtained from the power grid.

2. Charging device (12) according to claim 1,
**characterised in that**
the charging device (12) has a second charging mode and, in the second charging mode and in a state in which it is coupled to the energy source (16) and the motor vehicle (14), is designed to provide a variable charging power depending on the maximum amount of renewable energy (40) which can currently be provided by the energy source (16) in order to charge the energy store.

3. Charging device (12) according to any one of the preceding claims,
**characterised in that**
the communication unit (12b) is designed to communicate with a central data processing device (44) and, depending on an enabling signal transmitted by the central data processing device (44) and received by the communication unit (12b), to enable a charging process for charging the energy store.

4. Charging device (12) according to any one of the preceding claims,
**characterised in that**
the charging device (12) has a display device (12c) and is designed to display at least one current item of charging-related status information on the display device (12c).

5. Charging device (12) according to any one of the preceding claims,
**characterised in that**
the charging device (12) is designed to transmit at least one item of current, charging-related status information (40, 42) to a central data processing device (44).

6. Charging device (12) according to any one of claims 4 or 5,
**characterised in that**
the at least one current item of charging-related status information (40, 42) is at least one of the following items of status information (40, 42):
- a current occupancy state of the charging device (12);
- a current charging power (40) that can be provided exclusively by renewable energy (28);
- the current level of the second proportion of power (42); and
- a predicted remaining charging time.

7. System (10) having a charging device (12) according to any of the preceding claims and having the energy source (16) which can be coupled to the charging device (12) via the energy intake connection (36).

8. Method for controlling a charging device (12)
- which can be coupled to a motor vehicle (14) in order to electrically charge an energy store of a motor vehicle (14), and
- which has an energy intake connection (36) for coupling to an energy source (16), wherein the energy source (16) is designed to provide generated renewable energy (28) and energy (34) that can be obtained from a public power supply grid at the energy intake connection (36) of the charging device (12),
- wherein the energy source (16) has an energy generating device (20) for generating the renewable energy (28), and a connection device (22) for coupling to the public power supply grid, and
- wherein the charging device (12) has a first charging mode and, in the first charging mode and in a state in which it is coupled to the energy source (16) and the motor vehicle (14), provides a predefinable constant charging power for charging the energy store,
**characterised in that**
- the charging device (12), in the first charging mode, covers the predefinable constant charging power as far as possible with renewable energy (28), and only in the event that the predefinable charging power can only partially but not exclusively be provided by the renewable energy (28) that can be provided at the energy intake connection (36), provides a first proportion of power (40) in the form of renewable energy (28) and a second proportion of power (42) in the form of energy (34) obtained from the power supply grid in order to charge the energy store.
- wherein the first proportion of power (40) is provided in the form of a maximum proportion (40) of the renewable energy (28) that can be provided at the energy intake connection (36) by the energy source (16) for charging the energy store, and
- wherein the charging device (12) has a communication unit (12b) which communicates with a communication unit (24) associated with the energy source (16) and, in the first charging mode, requests the predefinable charging power in the form of the maximum proportion (40) of the renewable energy (28) that can be provided at the energy intake connection (36) by the energy source (16) and the second proportion of power (42) in the form of the energy (34) to be obtained from the power grid.

## Revendications

1. Dispositif de charge (12) pour le couplage avec un véhicule automobile (14) pour la charge électrique d'un dispositif de stockage d'énergie du véhicule automobile (14),
- dans lequel le dispositif de charge (12) présente un raccord de prélèvement d'énergie (36) pour le couplage avec une source d'énergie (16), dans lequel la source d'énergie (16) est conçue afin de fournir de l'énergie régénératrice générée (28) et de l'énergie (34) pouvant être obtenue d'un réseau d'alimentation électrique public au niveau du raccord de prélèvement d'énergie (36) du dispositif de charge (12),
- dans lequel la source d'énergie (16) présente un dispositif de génération d'énergie (20) pour la génération de l'énergie régénératrice (28), et un dispositif de raccordement (22) pour le couplage avec le réseau d'alimentation électrique public,
- dans lequel le dispositif de charge (12) présente un premier mode de charge et dans le premier mode de charge et dans un état couplé à la source d'énergie (16) et au véhicule automobile (14) est conçu afin de fournir une puissance de charge constante prescriptible pour la charge du dispositif de stockage d'énergie,
**caractérisé en ce que**
- le dispositif de charge (12) est en outre conçu dans le premier mode de charge afin de couvrir la puissance de charge constante prescriptible autant que possible par de l'énergie régénératrice (28) et seulement dans le cas où la puissance de charge prescriptible peut être fournie seulement en partie mais pas exclusivement par l'énergie régénératrice (28) pouvant être fournie au niveau du raccord de prélèvement d'énergie (36), de fournir une première part de puissance (40) sous la forme d'énergie régénératrice (28) et une seconde part de puissance (42) sous la forme d'énergie (34) obtenue du réseau d'alimentation électrique simultanément à la charge du dispositif de stockage d'énergie,
- dans lequel la première part de puissance (40) peut être fournie sous la forme d'une part (40) pouvant être fournie au maximum au niveau du raccord de prélèvement d'énergie (36) par la source d'énergie (16) de l'énergie régénératrice (28) pour la charge du dispositif de stockage d'énergie, et
- dans lequel le dispositif de charge (12) présente une unité de communication (12b) qui est conçue afin de communiquer avec une unité de communication (24) associée à la source d'énergie (16) et dans le premier mode de charge d'exiger la puissance de charge prescriptible sous la forme de la part (40) pouvant être fournie au maximum au niveau du raccord de prélèvement d'énergie (36) par la source d'énergie (16) de l'énergie régénératrice (28) et de la seconde part de puissance (42) sous la forme de l'énergie (34) à obtenir du réseau électrique.

2. Dispositif de charge (12) selon la revendication 1,
**caractérisé en ce que**
le dispositif de charge (12) présente un second mode de charge et dans le second mode de charge et dans un état couplé à la source d'énergie (16) et au véhicule automobile (14) est conçu afin de fournir une puissance de charge variable en fonction de la quantité d'énergie (40) régénératrice pouvant être fournie au maximum actuellement par la source d'énergie (16) pour la charge du dispositif de stockage d'énergie.

3. Dispositif de charge (12) selon l'une quelconque des revendications précédentes,
**caractérisé en ce que**
l'unité de communication (12b) est conçue afin de communiquer avec un dispositif de traitement de données (44) central, et en fonction d'un signal d'activation reçu par l'unité de communication (12b) et émis par le dispositif de traitement de données (44) central d'activer un processus de charge pour la charge du dispositif de stockage d'énergie.

4. Dispositif de charge (12) selon l'une quelconque des revendications précédentes,
**caractérisé en ce que**
le dispositif de charge (12) présente un dispositif d'affichage (12c) et est conçu afin d'afficher au moins une information d'état actuelle, liée à la charge sur le dispositif d'affichage (12c).

5. Dispositif de charge (12) selon l'une quelconque des revendications précédentes,
**caractérisé en ce que**
le dispositif de charge (12) est conçu afin de transmettre au moins une information d'état (40, 42) actuelle, liée à la charge à un dispositif de traitement de données (44) central.

6. Dispositif de charge (12) selon l'une quelconque des revendications 4 ou 5,
**caractérisé en ce que**
l'au moins une information d'état (40, 42) actuelle, liée à la charge constitue au moins une des informations d'état (40, 42) suivantes :
- un état d'occupation actuel du dispositif de charge (12) ;
- une puissance de charge (40) actuelle pouvant être fournie exclusivement par de l'énergie régénératrice (28) ;
- la hauteur actuelle de la seconde part de puissance (42) ; et
- un temps de charge restant prévu.

7. Système (10) avec un dispositif de charge (12) selon l'une quelconque des revendications précédentes et la source d'énergie (16) couplable au dispositif de charge (12) par le biais du raccord de prélèvement d'énergie (36).

8. Procédé de commande d'un dispositif de charge (12),
qui peut être couplé pour la charge électrique d'un dispositif de stockage d'énergie d'un véhicule automobile (14) au véhicule automobile (14), et
- qui présente un raccord de prélèvement d'énergie (36) pour le couplage avec une source d'énergie (16), dans lequel la source d'énergie (16) est conçue afin de fournir de l'énergie régénératrice générée (28) et de l'énergie (34) pouvant être obtenue d'un réseau d'alimentation électrique public au niveau du raccord de prélèvement d'énergie (36) du dispositif de charge (12),
- dans lequel la source d'énergie (16) présente un dispositif de génération d'énergie (20) pour la génération de l'énergie régénératrice (28), et un dispositif de raccordement (22) pour le couplage avec le réseau d'alimentation électrique public, et
- dans lequel le dispositif de charge (12) présente un premier mode de charge et dans le premier mode de charge et dans un état couplé à la source d'énergie (16) et au véhicule automobile (14) fournit une puissance de charge constante prescriptible pour la charge du dispositif de stockage d'énergie,
**caractérisé en ce que**
- le dispositif de charge (12) couvre dans le premier mode de charge la puissance de charge constante prescriptible autant que possible par de l'énergie régénératrice (28) et seulement dans le cas où la puissance de charge prescriptible peut être fournie seulement en partie mais pas exclusivement par l'énergie régénératrice (28) pouvant être fournie au niveau du raccord de prélèvement d'énergie (36), fournit une première part de puissance (40) sous la forme d'énergie régénératrice (28) et une seconde part de puissance (42) sous la forme d'énergie (34) obtenue du réseau d'alimentation électrique simultanément à la charge du dispositif de stockage d'énergie,
- dans lequel la première part de puissance (40) est fournie sous la forme d'une part (40) pouvant être fournie au maximum au niveau du raccord de prélèvement d'énergie (36) par la source d'énergie (16) de l'énergie régénératrice (28) pour la charge du dispositif de stockage d'énergie, et
- dans lequel le dispositif de charge (12) présente une unité de communication (12b) qui communique avec une unité de communication (24) associée à la source d'énergie (16) et dans le premier mode de charge exige la puissance de charge prescriptible sous la forme de la part (40) pouvant être fournie au maximum au niveau du raccord de prélèvement d'énergie (36) par la source d'énergie (16) de l'énergie régénératrice (28) et de la seconde part de puissance (42) sous la forme de l'énergie (34) à obtenir du réseau électrique.
